Europäisches Patentamt

European Patent Office

Office européen des brevets

(19)

(11) Publication number: **0 269 375**
**A2**

(12) **EUROPEAN PATENT APPLICATION**

(21) Application number: **87310249.5**

(22) Date of filing: **19.11.87**

(51) Int. Cl.⁴: **F16K 37/00**

(30) Priority: **24.11.86 US 934383**

(43) Date of publication of application:
**01.06.88 Bulletin 88/22**

(84) Designated Contracting States:
**BE CH ES FR GB IT LI SE**

(71) Applicant: **WESTINGHOUSE ELECTRIC CORPORATION**
**Westinghouse Building Gateway Center**
**Pittsburgh Pennsylvania 15222(US)**

(72) Inventor: **Ezekoye, L. Ike**
**1106 Wood Street**
**Pittsburgh, PA 15221(US)**
Inventor: **Cavada, David Robert**
**891 Wildlife Lodge Road**
**Lower Burrell, PA 15068(US)**

(74) Representative: **van Berlyn, Ronald Gilbert**
**23, Centre Heights**
**London, NW3 6JG(GB)**

(54) **Variable linear motion cycle monitoring device.**

(57) A device (3) for measuring cycles of random reciprocal motion of an object (7), such as a control valve (1) which moves in discrete movements of varying length between an opened and closed position, includes a cylindrical travel translator member (31) biased within a housing (23) by a coil spring (39) to maintain tension on a cable (5) connecting the travel translator member (31) to the object (7), so that the travel translator member (31) moves in a direction corresponding to and a distance proportional to that of the object (7). An elastomeric wheel (91) frictionally engages the travel translator member (31) to rotate a shaft (53) which operates a mechanical counter (19), and through a cam (81), a limit switch (87) which generates pulses representative of the random cycles of the object (7). Rotation of the shaft (53) is limited to that required to operate the counter (19) and limit switch (87) by stops (67, 61, 71) so that the elastomeric wheel (91) slips relative to the travel translator member (31) when the object (7) continues, either in the same movement or in successive movements, to travel in a given direction beyond the amount required to operate the counter (19) and limit switch (87).

FIG. 1.

## VARIABLE LINEAR MOTION CYCLE MONITORING DEVICE

### TECHNICAL FIELD

The invention relates to apparatus for counting cycles of reciprocal movement of an object which is movable in discrete movements of varying length in either direction between two fixed endpoints, and more particularly to such apparatus for recording reversals of the direction of movement of a valve member which is randomly moved varying amounts in either direction between opened and closed positions.

### BACKGROUND OF THE INVENTION

One of the factors that affect valve life is how often the valve is cycled. The more a valve is cycled the more likely some parts will be worn. For example, valve packing is sensitive to the number of cycles to which the valve is subjected. Knowledge of how many cycles the valve has experienced may be useful to maintenance personnel in predicting when to maintain the valve.

It is known to provide some valves with limit switches which generate an electrical signal indicating when the valve is in the opened and closed positions. For valves which travel from opened to closed and vice versa without stopping in between, such as isolation valves, it is possible to monitor operational cycles of the valve using these stem mounted limit switches to provide electronic pulses for a remote counter. It is also possible to install on such full travel valves mechanical counters to monitor the valve cycles. These possibilities are lost when one wants to know the operating cycles on valves such as control valves where the stroke is generally varying depending upon system flow requirements. In such valves, the valve member may move a fraction of the whole travel, or indeed the whole stroke, between the opened and closed positions. In addition, the valve member may move in one direction, stop and then move again in the same direction. Existing mechanical counters and limit switches actuated at the opened and closed position of a valve are ineffective for monitoring cycles of such random valve member movement since they are capable of measuring only full valve travel.

Accordingly, it is the object of this invention to provide apparatus for measuring random cycles of valve movement in valves where the valve member moves in discrete movements of varying lengths in either direction between the open and closed positions.

### DISCLOSURE OF THE INVENTION

The above object is obtained by the present invention, according to which, briefly stated, apparatus for recording cycles of reciprocal movement of a valve member which can be moved varying amounts in discrete movements in either direction between an open and closed position. Said apparatus being characterized by a travel translator member; a housing for guiding the travel translator member in reciprocal rectilinear movement; a means connecting the travel translator member to the valve member for reciprocal rectilinear movement in a direction corresponding to, and for a distance proportional to, the movement of the valve member; a shaft mounted for rotation about its longitudinal axis; means for limiting angular rotation of the shaft in each direction; means for counting the cycles of reciprocal rotation of the shaft between rotating limits set by the limiting means; and a means for coupling the shaft to the travel translator member for movement therewith between the limits set by the limiting means, and for relative movement between the translator member and the coupling means as the travel translator member continues movement in a given direction after the shaft reaches the limits of rotation set by the limiting means.

### BRIEF DESCRIPTION OF THE DRAWINGS

The invention will become more apparent by reading the following detailed description in conjunction with the drawings, which are shown by way of example only, wherein:

Figure 1 is an elevational view of a valve to which apparatus according to the invention has been applied;

Figure 2 is an end elevation view with some parts cut away of the apparatus of Figure 1;

Figure 3 is a side elevation view of the apparatus of 2, again with some parts cut away;

Figure 4 is a top view of a the apparatus with the top of the box enclosing the apparatus cut away; and

Figure 5 is a schematic diagram of a pressurized water reactor nuclear power plant incorporating the invention.

## DESCRIPTION OF THE PREFERRED EMBODIMENT

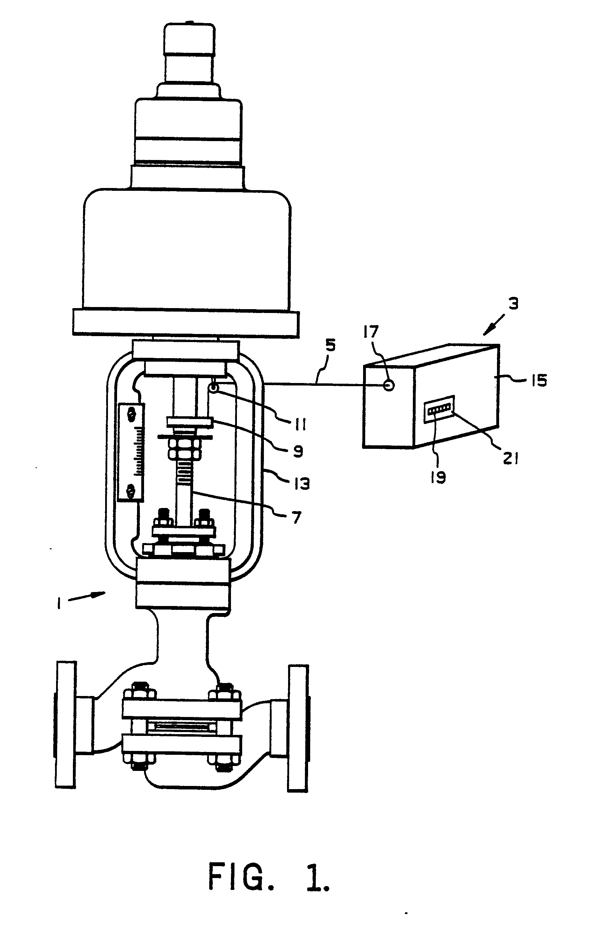

The invention will be described as applied to the air operated control valve 1 illustrated in Figure 1. The cycle monitoring device 3 of the invention is remotely mounted with a cable 5 connected to the valve actuator 7 by means of a clamp 9. To translate valve motion to the monitoring device 3, a pulley 11 is mounted on the stationary valve yoke 13 such that the valve stroke is directly translated to cable extension.

The monitoring device 3 includes a box-like protective structure 15 having an aperture 17 in one end through which the cable 5 passes. A mechanical counter 19 is visible through a window 21 in the front of the device.

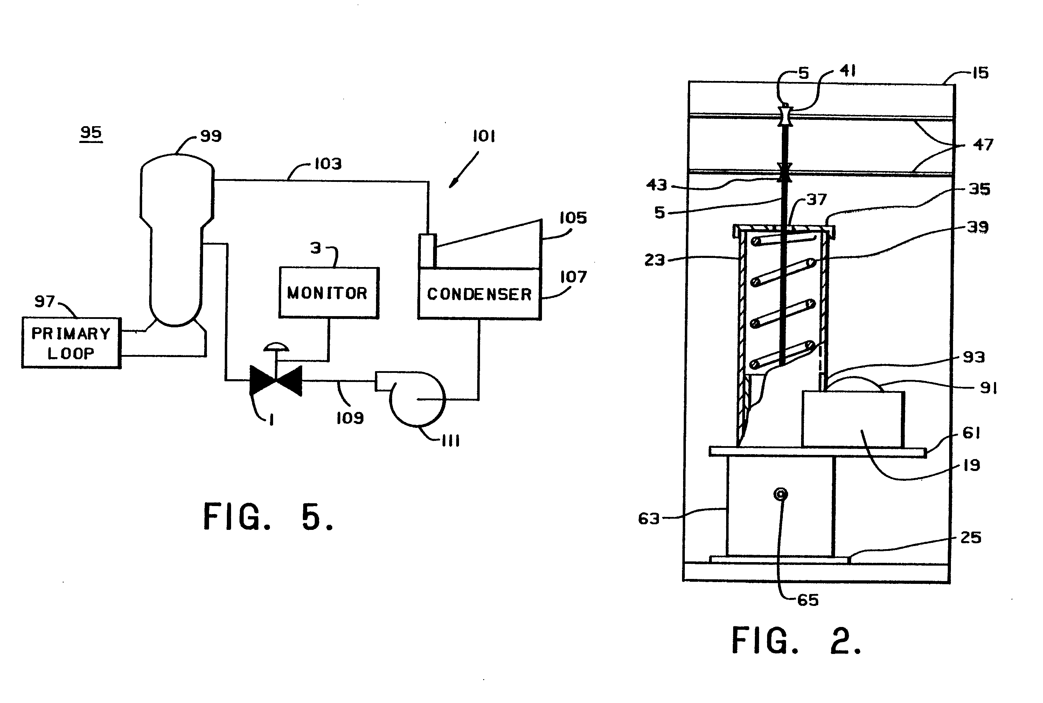

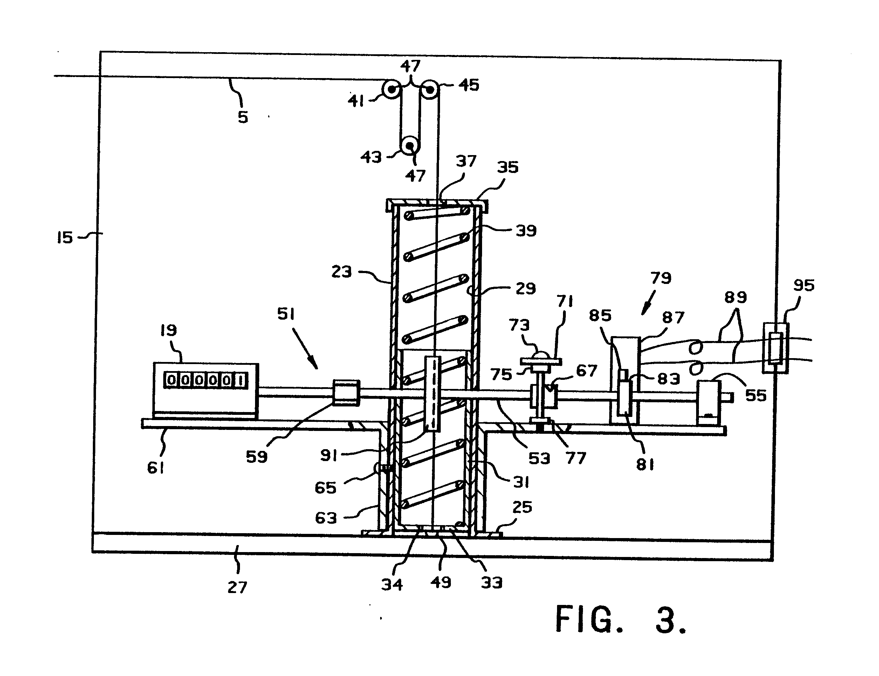

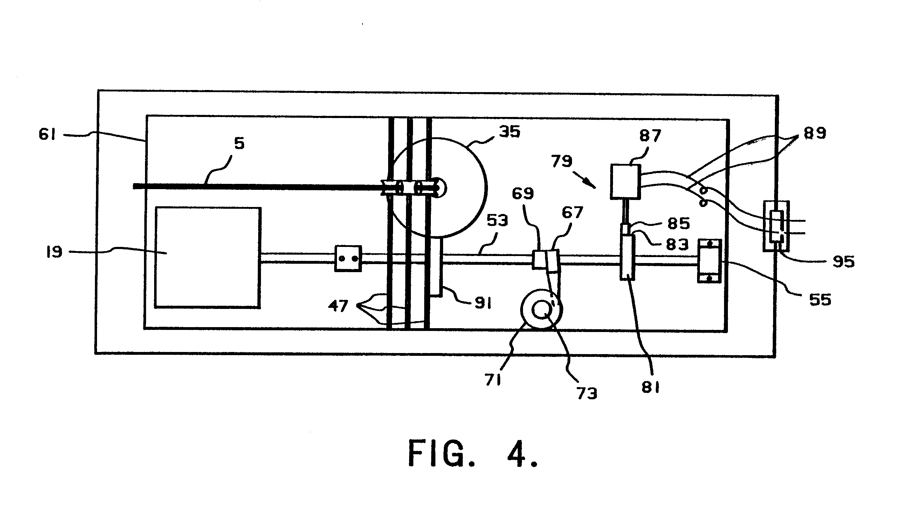

The internal structure of the monitoring device 3 is illustrated in Figures 2, 3, and 4 which are an end view, a front view, and a top plan view respectively, each shown with the appropriate side of the box-like structure removed. The device includes a housing 23 secured through a radial flange 25 at its lower end to the bottom 27 of the box 15. The housing 23 shown in section in Figures 2 and 3 defines an upright cylindrical chamber 29 in which a hollow cylindrical travel translator member 31, closed at its lower end 33, is vertically slidable. An end cap 35 having a central aperture 37 is threaded to the upper end of the housing 23. A helical compression spring 39 bears against this cap 35 to bias the travel translator member 31 toward the bottom of the chamber 29. The closed end 33 of the travel translator member 31 is provided with apertures 34 to permit air to bleed back and forth during translator motion.

The cable 5 connected to the valve operating member 7 is trained over pulleys 41, 43, and 45 mounted on shafts 47 extending across the box 15, passes through the aperture 37 in the end cap 35 and is connected to the closed end 33 of the travel translator member 31 by means of a cramped lug 49. The bias applied by the spring 39 maintains tension in the cable 5. It can be seen therefore at this point that movement of the valve operating member 7 produces corresponding movement in the travel translator member 31. The reciprocal rectilinear movement of the travel translator member 31 is in a direction corresponding to the direction of movement of the valve operator, and is of a magnitude proportional to the length of movement of the valve operator 7.

Apparatus 51 for counting the reversals in the direction of movement of the travel translator member 31 includes an operating member in the form of a shaft 53 which is mounted at one end for rotation about its axis by pillow block 55, and is connected at its other end to the mechanical counter 19 through a coupling 59. The counter 19 and pillow block 55 are supported by a bracket 61 which forms a horizontal platform. The bracket 61 is secured to the housing 23 by a depending cylindrical flange 63 and bolts 65.

Rotation of the shaft 53 is limited by a transversely extending lever 67 secured to the shaft by set screw 69. As the shaft 53 rotates in one direction, the lever 67 comes in contact with the bracket 61 which forms a stop to limit shaft rotation in the one direction. An oversized washer 71 supported above the bracket 61 by a cap screw 73 and nut 75 establishes the limit for rotation of the shaft in the opposite direction. The cap screw 73 is screwed into the bracket 61 and secured in place by a lock nut 77 so that the amount of angular rotation between limits can be adjusted by adjusting the position of the washer 71.

In addition to the mechanical counter 19, a device 79 is also provided to generate an electrical signal representative of cycles of travel of the shaft 53 between the limits of rotation. This device 79 includes a cam 81 mounted on the shaft 53 and having a camming surface 83 which engages the trip arm or plunger 85 on a limit switch 87 mounted on the bracket 61. Electrical leads 89 provide an electrical signal for local or remote counting of the strokes of the limit switch.

The shaft 53 is coupled to the travel translator member by an elastomeric wheel 91. The wheel 91 is fixed to one of the members 53 and 31 and frictionally engages the other such that rectilinear motion of the travel translator member 31 results in rotation of the shaft 53 until the lever 67 strikes one of the limits, whereupon the wheel slips relative to the member with which it is frictionally engaged. Preferably, the wheel is fixedly secured to the shaft 53 and its peripheral surface engages the travel translator member 31 through a vertical slot 93 (see Figure 2).

Figures 2, 3 and 4 show the position of the travel translator member 31 with the valve fully opened. For a closing motion of the valve, the downward motion of the valve stem 7 pulls the cable 5 which in turn lifts the travel translator member 31 against the bias of the spring 39. The upward motion of the travel translator member 31 rotates the elastomeric wheel 91 which is in direct contact with the travel translator member 31. The rotation of the wheel 91 rotates shaft 53 and thus advances the mechanical counter 19. Further rotation of the wheel in response to continued motion of the valve stem in the closing direction is prevented when lever 67 contacts the surface of bracket 61. Engagement of the lever 67 with the bracket 61 stops the rotation of the wheel so that continued motion of the travel translator member 31 results in the wheel 91 sliding on the surface of the translator 31.

A reversal of the motion of the valve stem causes the wheel 91 to rotate the shaft in the opposite direction thereby resetting the counter 19. The amount of motion during reversal is limited by the point at which the lever 67 contacts the washer 71. Continued motion of the valve stem in this opposite direction, whether in one continuous motion or through discrete movements, also results in the wheel 91 sliding with respect to the travel translator member 31. As can be seen then, it is only the initial travel in a given direction which results in rotation of the shaft 53. The rocking motion imparted to the cam 81 as the shaft 53 rotates between its limits results in the limit switch trip arm 85 engaging in and out of the profile on the cam surface 83 to provide intermittent electrical continuity for a local or remote recording by a electrical counter (not shown). Connector 95 provides access to the limit switch leads 89 for the remote indication.

It can be seen therefore that the shaft 53 rotates only during the initial movement of the travel translator member 31, and therefore the valve member 7, in a given direction. The amount of movement, however, is sufficient to operate the mechanical counter 19 and the limit switch 87. The amplitude of the cycle can be varied by adjusting the size of the elastomeric wheel 91, and/or varying the length of the gaps between the washer 71 and the surface of bracket 61.

The exemplary valve 1 is used to control feedwater flow in a pressurized water reactor (PWR) nuclear power plant. As shown in Figure 5, the PWR plant 95 includes a primary loop 97 which incorporates a nuclear reactor (not shown). The reactor heats reactor coolant which is circulated through the primary side of a steam generator 99. The steam generator 99 utilizes the heat in the reactor coolant to generate steam which is circulated in a secondary loop 101. The steam is conducted through a steam header 103 to a steam turbine 105 which drives a generator (not shown). Vitiated steam from the turbine 105 is condensed in condenser 107 and the condensate is pumped back to the steam generator 99 as feedwater through feedwater line 109 by feedwater pump 111. The flow of feedwater to the steam generator 99 through feedwater line 109 is controlled by the feedwater flow control valve 1. With the plant 95 operating in the load follow mode, that is with plant output adjusted to meet varying electrical load conditions, the valve member of valve 1 is moved often in varying amounts in either the open or closed direction. It is very desirable to monitor the cyclic operation of the feedwater valve 1, which is a critical item in the operation of the plant 95, in order that preventative maintenance can be performed on a timely basis to preclude down time. Accordingly, the monitoring device 3 is attached to the valve 1 in the manner discussed above.

There are many other types of valves in a nuclear power plant and in other applications where the above described monitoring device is also useful.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the invention which is to be given the full breadth of the appended claims and any and all equivalents thereof.

## Claims

1. Apparatus (3) for recording cycles of reciprocal movement of a valve member (7) which can be moved varying amounts in discrete movements in either direction between an open and a closed position, said apparatus (3) characterized by:

a travel translator member (31);

a housing (23) for guiding said travel translator member (31) in reciprocal rectilinear movement;

means (5) connecting said travel translator member (31) to said valve member (7) for reciprocal rectilinear movement in a direction corresponding to, and for a distance proportional to, the movement of said valve member (7);

a shaft member (53) mounted for rotation about its longitudinal axis;

means (67, 61, 71) for limiting angular rotation of said shaft member in each direction;

means (19, 87) for counting cycles of reciprocal rotation of said shaft member (53) between rotating limits set by said limiting means (67, 61, 71); and

means (91) for coupling said shaft member (53) to said travel translator member (31) for movement therewith between said limits set by said limit means (67, 61, 71) and for relative movement therebetween as said translator member (31) continues movement in a given direction after said shaft member (53) reaches the limits of rotation set by said limiting means (67, 61, 71).

2. The apparatus (3) of Claim 1 further characterized in that said coupling means comprises a wheel (91) mounted on said shaft member (53) and in engagement with said travel translator member (31), said wheel (91) translating movement of said travel translator member (31) into rotation of said shaft member (53) between said limits of rotation of said shaft member (53) set by said limit means (67, 61, 71), and said wheel (91) moving relative to one of said members (31, 53) once the limits of rotation of said shaft member (53) are reached and the travel translator member (31) continues movement in the same direction.

3. The apparatus (3) of Claim 2 further characterized in that said wheel (91) is in frictional engagement with said one member and slips relative thereto once said limits of rotation of said shaft member (53) are reached.

4. The apparatus (3) of Claim 3 further characterized in that said one member is the travel translator member (31) and said wheel (91) is fixed to the shaft member (53).

5. The apparatus (3) of Claim 4 further characterized in that said means (19, 87) for counting cycles of reciprocal rotation of said shaft member (53) includes a switch (87) having a plunger (85) which generates a pulse for each stroke of the plunger (85), and a cam member (81) mounted on said shaft member (53) for rotation therewith, said cam member (81) having a camming surface (83) which bears against said plunger (85) to translate rotation of said shaft member (53) between said limits into strokes of said plunger (85).

6. The apparatus (3) of Claim 4 further characterized in that said means for connecting said travel translator member (31) to said valve member (7) comprises a tension member (5) and wherein said apparatus (3) includes biasing means (39) for biasing the travel translator member (31) relative to the housing (23) to maintain said tension member (5) under tension.

7. The apparatus (3) of Claim 6 further characterized in that said housing (23) defines a cylindrical chamber (29), said travel translator member comprises a cylindrical member (31) slidable in said cylindrical chamber (29) and said biasing means comprises a helical compression spring (39) biasing said cylindrical member (31) along said chamber (29) to maintain tension on said tension member (5), and wherein said housing (23) defines a slot (93) therethrough through which said wheel (91) extends into frictional engagement with said cylindrical member (31).

8. Apparatus (3) for recording cycles of reciprocal movement of an object (7) which is movable in discrete movements of varying length in either direction between fixed limits, said apparatus (3) characterized by:

a travel translator member (31):

means (5) connecting the travel translator member (31) to the object (7) for reciprocal movement in a direction corresponding to the direction of object (7) movement by an amount proportional to the amount of object (7) movement: and

means (51) for counting reversals of direction of movement of the travel translator member (31).

9. The apparatus (3) of Claim 8 further characterized in that said means (51) for counting the reversals of direction of movement of said translator member (31) comprises:

an operating member (53) movable reciprocally between preset limits;

means (19, 87) for counting cycles of movement of said operating member (53) between limits ;and

coupling means (91) for coupling said operating member (53) to said travel translator member (31) to move said operating member (53) in one direction to one of said preset limits in response to movement of said travel translator member (31) in a first direction and to maintain said operating member (53) at said one of said preset limits for any additional movement of the travel translator member (31) in said first direction, and to move said operating member (53) in the reciprocal direction to the other of said preset limits in response to movement of said travel translator member (31) in a second direction and to maintain said operating member (53) at said other preset limit for any additional movement of said travel translator member (31) in the second direction.

10. The apparatus (3) of Claim 9 further characterized by means (23) for guiding said travel translator member (31) in reciprocal rectilinear movement in response to movement of the object (7), and wherein said operating member comprises a shaft (53) mounted for rotation about its axis, first limit means (67) for limiting rotation of said shaft member (53) in one direction to effect said one preset limit, and second limit means (71) for limiting rotation of said shaft (53) in the other direction to effect said other limit, and wherein said coupling means comprises a wheel (91) fixedly engaging one of said shaft member (53) and travel translator member (31) and frictionally engaging the other such member, such that said wheel (91) slips relative said to other member when rotation of said shaft member (53) is limited by said first and second limit means (67, 71).

11. The apparatus (3) of Claim 10 further characterized in that said means for counting cycles of movement of the operating member comprises an output device (87) which provides intermittent electrical continuity with each stroke, and means (81) for translating rotation of said shaft (53) in a complete cycle from one limit to the other and back to the one limit into strokes of said output device (87).

12. The apparatus (3) of Claim 11 further characterized in that said wheel (91) is fixedly mounted on said shaft member (53) for coaxial rotation therewith, and with the periphery of said wheel (91) frictionally engaging said translator means (31).

13. A pressurized water reactor nuclear power plant (95) including feedwater flow control valve (1) having a valve member (7) which can be moved varying amounts in discrete movements in either direction between an open and a closed position to control feedwater flow; characterized by apparatus (3) for recording cycles of reciprocal movement of said valve member (7), said apparatus (3) comprising a travel translator member (31), means (5) connecting said travel translator member (31) to said valve member (7) for reciprocal rectilinear movement in a direction corresponding to, and for a distance proportional to, the movement of said valve member (7), a shaft member (53) mounted for rotation about its longitudinal axis, limiting means (67, 61, 71) for limiting angular rotation of said shaft member (53) in each direction; means (19, 87) for counting cycles of reciprocal rotation of said shaft member (53) between rotating limits set by said limiting means (67, 61, 71); and a wheel (91) mounted on said shaft member (53) and in engagement with said travel translator member (31), said wheel (91) translating movement of said travel translator member (31) into rotation of said shaft member (53) between said limits of rotation of said shaft member (53) set by said limiting means (67, 61, 71), and said wheel (91) moving relative to one of said members (31, 53) once the limits of rotation of said shaft member (53) are reached and the travel translator member (31) continues movement in the same direction.

14. The plant (95) of Claim 13 further characterized in that said one of said members (31, 53) is said travel translator member (31) and said wheel (91) is in frictional engagement therewith and slips relative thereto once said limits of rotation of said shaft member (53) are reached.

FIG. 1.

FIG. 2.

FIG. 5.

FIG. 3.

0 269 375

FIG. 4.

0 269 375